# EUROPÄISCHE PATENTANMELDUNG

(11) **EP 2 253 405 A1**
(43) Veröffentlichungstag der Anmeldung: **24.11.2010**
(21) Anmeldenummer: 10005153.1
(22) Anmeldetag: 17.05.2010
(51) Int. Cl.: B23D 59/00, B27B 1/00, B27B 31/06

(54) **Anlage und Verfahren zum zerlegen von Baumstämmen**

(30) Priorität: 18.05.2009 DE 102009021690
(71) Anmelder: Burger, Georg, 88167 Stiefenhofen (DE)
(72) Erfinder: Burger, Georg, 88167 Stiefenhofen (DE)
(74) Vertreter: von Puttkamer · Berngruber

(57) **Zusammenfassung**

Die Erfindung betrifft eine Anlage zum Zerlegen von Baumstämmen, die eine Beladestation (I), in der ein Baumstamm (1) einer Fördervorrichtung (2) zugeführt wird, eine Bearbeitungsstation (II), in der der Baumstamm (1) mit wenigstens einer Sägeeinrichtung (3, 13) in einzelnen Sägeschritten zu Brettern (4) zersägt wird, eine Kontrollstation (IV), in der jeweils nach einer in der Bearbeitungsstation (II) ausgeführten Sägeoperation der verbleibende Rest des Baumstammes (1) zur Erfassung der Abmessung und Qualität des Baumstammes (1) kontrolliert wird, und eine Entnahmestation (III) umfasst, in der die in der Bearbeitungsstation (II) jeweils hergestellten Bretter (4) von der Fördervorrichtung (2) entnommen werden, wobei aus den in der Kontrollstation (IV) ermittelten Informationen Steuersignale (S) zur Steuerung der Sägeeinrichtung (3) der Bearbeitungsstation (II) verwendet werden.

## Beschreibung

Die vorliegende Erfindung betrifft eine Anlage und ein Verfahren zum Zerlegen von Baumstämmen.

Aus der DE 199 13 566 A1, geht eine Vorrichtung zum Zerlegen von Baustämmen hervor, die eine Sägestraße mit mehreren Sägestationen umfasst. Es sind Förderer zum Befördern eines Baumstammes von einer Sägestation zur nächsten vorgesehen, wobei die Förderer den Baumstamm den Sägestationen jeweils so zuführen, dass die Schnittfläche in dem Baumstamm, die von einem ersten Teil der Sägestation erzeugt wird, einen Winkel zur Schnittebene in dem Baumstamm aufweist, die von einem zweiten Teil der Sägestation erzeugt wird.

Die Aufgabe der vorliegenden Erfindung besteht darin, eine Anlage und ein Verfahren zum Zerlegen von Baumstämmen zu schaffen, durch die bzw. das aus einem Baumstamm Bretter einer hohen Qualität und Quantität heraussägbar sind.

Diese Aufgabe wird durch eine Anlage zum Zerlegen von Baumstämmen gelöst, die einzelne Stationen aufweist, denen ein Baumstamm mit der Hilfe einer Fördervorrichtung zugeführt wird. Die Anlage umfasst eine Beladestation, in der ein Baumstamm der Fördervorrichtung zugeführt wird, eine Bearbeitungsstation, in der der Baumstamm mit wenigstens einer Sägeeinrichtung in einzelnen Sägeschritten zu Brettern zersägt wird, eine Kontrollstation, in der jeweils nach einer in der Bearbeitungsstation ausgeführten Sägeoperation der verbleibende Rest des Baumstammes zur Erfassung seiner Abmessung und Qualität kontrolliert wird, und eine Entnahmestation, in der die in der Bearbeitungsstation jeweils hergestellten Bretter von der Fördervorrichtung entnommen werden, wobei aus den in der Kontrollstation ermittelten Informationen Steuersignale zur Steuerung der Sägeeinrichtung der Bearbeitungsstation verwendet werden.

Die Beladestation umfasst besonders vorteilhaft einen Querförderer, dem vereinzelte Baumstämme entnehmbar und auf einer Ablagefläche der Fördervorrichtung (2) abgelegbar sind. Die Fördereinrichtung weist zweckmäßigerweise die Form eines Blockwagens auf.

Die Sägeeinrichtung der Bearbeitungsstation besitzt bei einer bevorzugten Ausgestaltung der Erfindung die Form einer Bandsäge, deren Sägeblatt vorzugsweise in einer horizontalen Ebene bewegt wird, wobei die Fördervorrichtung mit dem Baumstamm zur Ausführung eines Sägeschnittes zur Bandsäge bewegbar ist. Alternativ ist es auch denkbar, die Sägeeinrichtung zur Ausführung eines Sägeschnittes zur Fördervorrichtung zu bewegen. Die Bearbeitungsstation kann zur weiteren Verarbeitung der mit der Sägeeinrichtung erzeugten Bretter eine weitere Sägeeinrichtung umfassen, die der Sägeeinrichtung vor- oder nachgeschaltet ist und zur Erzeugung einzelner Bohlen aus einem Brett einzelne Sägeblätter aufweist, die vorzugsweise quer zur Bewegungsrichtung des Baumstammes voneinander beabstandet sind. Die sägeblätter der weiteren Sageeinrichtung sind in Bezug auf die Längsachse des Baumstammes vorzugsweise derart geneigt, dass ihre Schnittebenen jeweils parallel zu den Fasern des Baumstammes verlaufen. Zumindest die äußeren Sägeblätter der weiteren Sägeeinrichtung werden in Bezug auf die Schnittebene der Sägeeinrichtung derart geneigt, dass ihre Schnittebenen jeweils tangential zum Außenumfang des Querschnittes des Baumstammes verlaufen. Besonders zweckmäßig werden dabei als Sägeblätter Kreissägeblätter verwendet.

Die Kontrollstation erzeugt nach jeder in der Bearbeitungsstation durch die Sägeeinrichtung ausgeführten Sägeoperation Informationen über die Form des Baumstammes in der Schnittebene des gerade in der Bearbeitungsstation bearbeiteten Baumstammes und speichert diese in einer Recheneinheit, die daraus ein Steuersignal erzeugt und der Bearbeitungsstation zur Einstellung der Neigung der Sägeblätter der weiteren Sägeeinrichtung in Bezug auf die Längsachse des Baumstammes zum Sägen parallel zu den Fasern des Baumstammes zuführt. Ferner erzeugt die.Kontrollstation zur Herstellung von Brettern einer besonders guten Qualität Informationen über die jeweilige Qualität des Baumstammes ausgehend von der Oberfläche des gerade bearbeiteten Baumstammes bis zu einer bestimmten Tiefe, die die gewünschte Qualität des herzustellenden Brettes sicherstellt. Diese Informationen werden in einer Recheneinheit gespeichert, die daraus ein Steuersignal erzeugt und der Bearbeitungsstation zur Einstellung der Schnitttiefe der Sägeeinrichtung zuführt.

Bei dem erfindungsgemäßen Verfahren zum Zerlegen von Baumstämmen wird ein Baumstamm zur Ausführung eines Bearbeitungszyklus in der Beladestation einer Fördervorrichtung zugeführt, wird die beladene Fördervorrichtung zu der Bearbeitungsstation bewegt, in der der Baumstamm mit wenigstens einer Sägeeinrichtung in einzelnen Sägeschritten zu Brettern zersägt wird, wird die Fördervorrichtung zu der Entnahmestation bewegt, in der ihr die jeweils in der Bearbeitungsstation aus dem Baumstamm hergestellten Bretter entnommen werden, wird die Fördervorrichtung zu der Kontrollstation bewegt, in der jeweils nach einer in der Bearbeitungsstation ausgeführten Sägeoperation der verbleibende Rest des Baumstammes zur Erfassung seiner Abmessung und Qualität kontrolliert wird, wobei aus den in der Kontrollstation ermittelten Informationen Steuersignale zur Steuerung der Sägeeinrichtung der Bearbeitungsstation bei dem an dem Baumstamm auszuführenden nächsten Sägeschrittverwendet verwendet werden, und wird die Fördervorrichtung danach zur Ausführung des nächstfolgenden Bearbeitungszyklus wieder zur Beladestation (I) bewegt. Nach der Ausführung der zum Zerlegen des Baumstammes erforderlichen Bearbeitungszyklen wird die Fördervorrichtung in der Beladestation mit einem weiteren zu zerlegenden Baumstamm beladen. Auf diese Weise wird erreicht, dass fortlaufend Baumstämme zerlegt werden und die vorliegende Anlage effektiv und kostengünstig arbeitet.

Zusammengefasst besteht der wesentliche Vorteil der vorliegenden Erfindung darin, dass aus einem Baumstamm Bretter bzw. Bohlen mit einer hohen Qualität bei einer gleichzeitig großen Ausbeute herausgesägt werden können. Dabei ist die erfindungsgemäße Anlage so beschaffen, dass während des Zerlegens der Baumstämme nach jeder Sägeoperation an einem Baumstamm eine voraussagende Kontrolle erfolgt, wobei die Ergebnisse dieser Kontrolle bei der nächstfolgenden Sägeoperation an dem Baumstamm dahingehend berücksichtigt werden, dass beispielsweise vor Ausführung der nächstfolgenden Sägeoperation die Schnitttiefe der Bandsäge eingestellt wird.

Im Folgenden werden die Erfindung und deren Ausgestaltungen im Zusammenhang mit den Figuren näher erläutert. Es zeigen:
Figur 1 in schematischer Darstellung eine Ansicht der erfindungsgemäßen Anlage zum Zerlegen von Baustämmen von oben und
Figuren 2 bis 5 verschiedene Darstellungen zur Erläuterung der Erfindung.

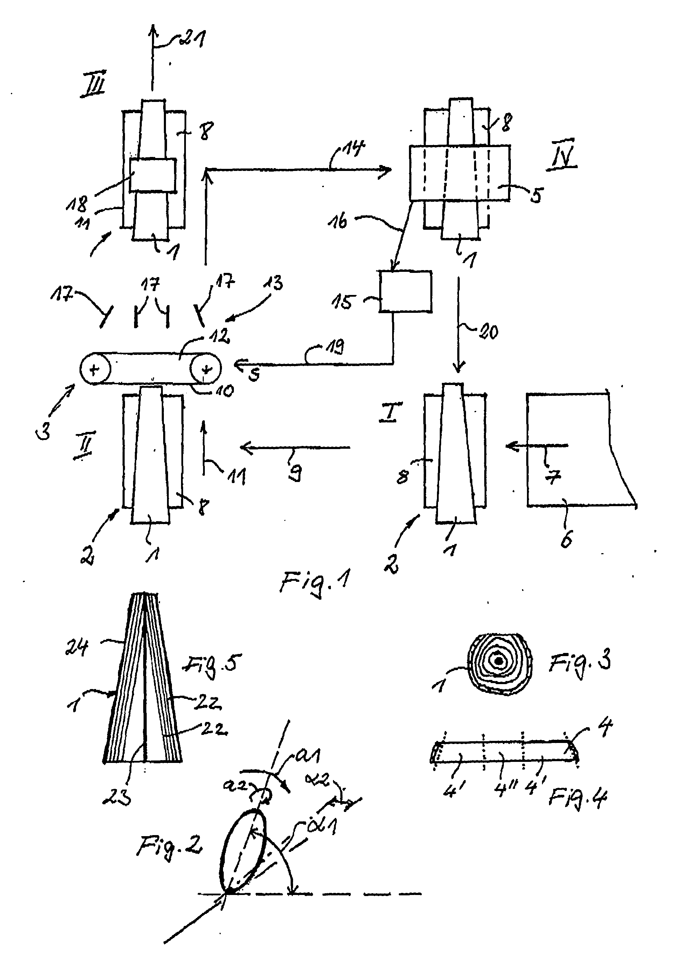

Gemäß Figur 1 umfasst die vorliegende Anlage zum Zerlegen von Baumstämmen im Wesentlichen eine Beladestation I, in der ein Baumstamm 1 einer Fördervorrichtung 2 zugeführt wird, eine Bearbeitungsstation II, in der der Baumstamm 1 mit der Hilfe wenigstens einer Sägeeinrichtung 3 in einzelnen Sägeschritten in Bretter 4 (Figur 4) zersägt wird, eine Entnahmestation III, in der nach jeweils einer Sägeoperation ein hergestelltes Brett 4 von der Fördervorrichtung 2 abgenommen und einem geeigneten Lager zugeführt wird, und eine Kontrollstation IV, in der mit Hilfe einer Kontrolleinrichtung 5, bei der es sich vorzugsweise um eine Röntgeneinrichtung handelt, jeweils nach einer in der Bearbeitungsstation III ausgeführten Sägeoperation an dem verbleibenden Rest des Baumstammes 1 eine "quasi in die Tiefe schauende Kontrolle" ausgeführt wird. Durch diese Kontrolle werden die Abmessung und die Qualität des Baumstammes 1 erfasst, um die mögliche Dicke des als nächstes in der Bearbeitungsstation III zu erzeugenden Brettes 4 zu bestimmen.

Beispielsweise wird in der Beladestation I ein Baumstamm 1 einem sogenannten Querförderer 6 entnommen und in der Richtung des Pfeiles 7 der Fördervorrichtung 2 zugeführt. Bei der Fördervorrichtung 2 handelt es sich beispielsweise um einen an sich bekannten Blockwagen, der eine Ablagefläche 8 für den Baumstamm 1 aufweist und zwischen den einzelnen Stationen I bis IV bewegbar bzw. verfahrbar ist.

Die Fördervorrichtung 2 wird von der Beladestation I in der Richtung des Pfeiles 9 zur Bearbeitungsstation II bewegt. Die Sägeeinrichtung 3 der Bearbeitungsstation II weist vorzugsweise die Form einer Bandsäge 12 auf, deren Sägeblatt 10 in einer horizontalen Ebene bewegt wird. Dabei wird vorzugsweise die Fördervorrichtung 2 in der Richtung des Pfeiles 11 zur Ausführung eines Sägeschnittes in der Längsrichtung des Baumstammes 1 bewegt.

Die Bearbeitungsstation II umfasst neben der Bandsäge 12 vorzugsweise eine weitere Sägeeinrichtung 13, die einzelne, in Querrichtung des Baumstammes 1 voneinander beabstandete Sägeblätter 17 aufweist. Die Sägeblätter 17 sind in der Figur 1 im Verhältnis zum Baumstamm 1 übertrieben groß dargestellt, um ihre Lagen zu verdeutlichen. Zumindest die äußeren Sägeblatter 17 sind gemäß Figur 2 im Hinblick auf ihre Winkel α1 zur Schnittebene der Sägeeinrichtung als auch im Hinblick auf ihre Winkel α2 zwischen ihrer Schnittebene und der Längsachsen des Baumstammes 1 verstellbar (siehe Pfeil al und a2. Durch Änderung des Winkels α1 lässt sich eine Anpassung an den sich in Längsrichtung im Hinblick auf seine Dicke bzw. Durchmesser verändernden Baumstamm 1 erreichen. Durch Einstellen des Winkels α2 lässt sich eine Anpassung an die Außenkontur des Querschnittes eines aus dem Baumstamm 1 herauszusägenden Brettes 4 erreichen. Es wird darauf hingewiesen, dass die Sägeeinrichtung 13 der Sägeeinrichtung 3 vor- oder nachgeschaltet sein kann. Mit der Hilfe der Sägeeinrichtung 13 können aus einem mit der Sägeeinrichtung hergestellten Brett 4 einzelne Bohlen 4' herausgeschnitten werden, wie dies durch die gepunkteten Linien der Figur 4 angedeutet ist.

Es wird dabei darauf hingewiesen, dass auch die inneren Sägen 17 vorzugsweise um einen Winkel α2 geneigt eingestellt werden können, um zu erreichen, dass gemäß Figur 5, die Schnittlinien entlang der Fasern 22 des Baumstammes 1 verlaufen. Die mittlere Bohle 4" (siehe Figur 4) weist daher schräg zum Mark 23 verlaufende Außenränder auf. Sie ist leicht konisch ausgebildet. Eine rechteckige Bohle kann dadurch erhalten werden, dass zwei in dieser Weise erzeugte konische Bohlen 4" gegensinnig aneinandergelegt und miteinander verleimt werden.

Da die Fasern der auf diese Weise hergestellten Bohlen 4' keine durchschnittenen Fasern aufweisen, lassen sich Bohlen 4' optimaler Länge und ausgezeichneter Qualität herstellen.

Bei den Sägeblättern 17 handelt es sich vorzugsweise um Kreissägeblätter.

Im Folgenden wird die Funktion der erfindungsgemäßen Anlage näher erläutert. Ein von dem Querförderer 6 auf der Fördereinrichtung 2 abgelegter Baumstamm 1 wird in der Richtung des Pfeiles 9 zur Bearbeitungsstation II und dort in der Richtung des Pfeiles 11 zu den Sägeeinrichtungen 3 und 13 verfahren. Zunächst wird in einem sogenannten Eröffnungsschnitt, der mit der Hilfe der Bandsäge 12 ausgeführt wird, eine Außenschicht des Baumstammes 1, die insbesondere einen Teil der Rindenschicht 24 umfasst, abgeschnitten. Der Baumstamm 1 weist dann etwa den in der Figur 3 dargestellten Querschnitt auf. Danach wird der Baumstamm 1 mit der Fördervorrichtung 2 in der Richtung des Pfeiles 14 über die Entnahmestation III zur Kontrollstation IV verfahren, in der von oben her der die Querschnittsform der Figur 3 aufweisende Baumstamm 1 mit der Hilfe der Kontrolleinrichtung 5 vorzugsweise mit einer Röntgenstrahlung durchleuchtet wird. Dabei wird auf einem Röntgenschirm (nicht dargestellt) ein "quasi in die Tiefe schauendes" Röntgenbild des Baumstammes 1 abgebildet. In diesem Röntgenbild ist erkennbar, bis zu welcher Tiefe seines Querschnittes der Baumstamm 1 von oben her gesehen eine gleichbleibende bzw. tolerierbare Qualität besitzt. Insbesondere werden dabei die Lagen von grünen oder schwarzen Ästen oder astreine Bereiche erfasst. In Abhängigkeit von dem Ergebnis der Röntgenaufnahme, deren Daten in digitalisierter Form einem Prozessor bzw. einer Recheneinheit 15 zugeführt werden (Leitung 16), sendet die Recheneinheit 15 ein Steuersignal S über die Leitung 19 an eine Steuereinrichtung der Sägeeinrichtung 3. In Abhängigkeit von dem Steuersignal S wird die Schnitttiefe zur Erzeugung eines möglichst dicken Brettes 4 einer hohen Qualität eingestellt. Anstelle der Untersuchung des Baumstammes 1 mit einer Röntgenstrahlung ist es z. B. auch denkbar die Oberfläche des Baumstammes abzuscannen oder mit einer Ultraschallstrahlung zu untersuchen

Anschließend wird der Baumstamm 1 mit der Fördervorrichtung 2 in der Richtung des Pfeiles 20 zur Bearbeitungsstation I und von dieser in der Richtung des Pfeils 9 wieder zur Bearbeitungsstation II bewegt, sodass dort in der berechneten Schnittebene bzw. -tiefe ein Schnitt zur Herstellung eines Brettes 4 einer möglichst großen Dicke bei einer hohen Qualität ausgeführt wird. Gleichzeitig werden vorzugsweise die Winkel α1 und α2 der Kreissägen 17 der Sägeeinrichtung 13 in der zuvor erläuterten Weise eingestellt. Die Steuergrößen hierfür liefert ebenfalls die die Signale der Kontrolleinrichtung 5 auswertende Recheineinheit 15.

Nach der Ausführung wenigstens eines Schnittes in der Bearbeitungsstation II wird die Fördervorrichtung 2 zur Entnahmestation III verfahren (Pfeil 14). In dieser wird das gerade erzeugte Brett 4 bzw. werden die gerade erzeugten Bohlen 4' z. B. mit der Hilfe einer Saugeinrichtung 18 vom Baumstamm 1 abgehoben und in der Richtung des Pfeils 21 zu einem nicht dargestellten Lager transportiert. Der Baumstamm wird danach in Richtung des Pfeils 14 zur Kontrollstation IV verfahren und dort zur Vorbereitung der nächsten Sägeoperationen/en in der Kontrollstation IV in der bereits erläuterten Weise untersucht bzw. kontrolliert.

Es wird darauf hingewiesen, dass die erfindungsgemäße Anlage äußerst effektiv arbeitet, weil gleichzeitig in dem beschriebenen Takt bzw. Arbeitszyklus vier Fördervorrichtungen 2 mit Baumstämmen 1 zwischen den einzelnen Stationen I bis IV bewegt werden können.

Es wird ferner darauf hingewiesen, dass die Baumstämme 1 jeweils in der in einer parallelen Patentanmeldung (DE 10 2009 016 357.3) desselben Anmelders erläuterten Weise auf den Fördervorrichtungen 2 so angehoben bzw. abgesenkt werden können, dass bei der Ausführung der einzelnen Schnitte, durch die Sägeeinrichtung 3 die oberhalb bzw. unterhalb des Markes des Baumstammes 1 sich diametral gegenüberliegenden Aussenkanten des Baumstammes 1 jeweils in die Schnittebene der Bandsäge 12 gelangen.

### Bezugszeichen

- 1: Baumstamm
- 2: Fördervorrichtung
- 3: Sägeeinrichtung
- 4: Brett
- 4': Bohle
- 5: Kontrolleinrichtung
- 6: Querförderer
- 7: Pfeil
- 8: Ablagefläche
- 9: Pfeil
- 10: Sägeblatt
- 11: Pfeil
- 12: Bandsäge
- 13: Sägeeinrichtung
- 14: Pfeil
- 15: Recheneinheit
- 16: Leitung
- 17: Sägeblatt
- 18: Saugeinrichtung
- 19: Leitung
- 20: Pfeil
- 21: Pfeil
- 22: Faser
- 23: Mark
- 24: Rindenschicht

- I: Beladestation
- II: Bearbeitungsstation
- III: Entnahmestation
- IV: Kontrollstation
- S: Steuersignal
- L: Längsachse
- a1: Pfeil
- a2: Pfeil

## Patentansprüche

1. Anlage zum Zerlegen von Baumstämmen mit einzelnen Stationen, denen ein Baumstamm (1) mit der Hilfe einer Fördervorrichtung (2) zugeführt wird, **dadurch gekennzeichnet, dass** die Anlage eine Beladestation (I), in der ein Baumstamm (1) der Fördervorrichtung (2) zugeführt wird, eine Bearbeitungsstation (II), in der der Baumstamm (1) mit wenigstens einer Sägeeinrichtung (3; 13) in einzelnen Sägeschritten zu Brettern (4) zersägt wird, eine Kontrollstation (IV), in der jeweils nach einer in der Bearbeitungsstation (II) ausgeführten Sägeoperation der verbleibende Rest des Baumstammes (1) zur Erfassung seiner Abmessung und Qualität kontrolliert wird, und eine Entnahmestation(III) umfasst, in der die in der Bearbeitungsstation (II) jeweils hergestellten Bretter (4) von der Fördervorrichtung (2) entnommen werden, wobei aus den in der Kontrollstation (IV) ermittelten Informationen Steuersignale (S) zur Steuerung der Sägeeinrichtung (3) der Bearbeitungsstation (II) verwendet werden.

2. Anlage zum Zerlegen von Baumstämmen nach Anspruch 1,
**dadurch gekennzeichnet, dass** die Beladestation (I) einen Querförderer (6) umfasst, dem vereinzelte Baumstämme (1) entnommen und auf einer Ablagefläche (8) der Fördervorrichtung (2) abgelegt werden kann.

3. Anlage zum Zerlegen von Baumstämmen nach Anspruch 1 oder 2, **dadurch gekennzeichnet, dass** die Fördereinrichtung (2) die Form eines Blockwagens aufweist.

4. Anlage zum Zerlegen von Baumstämmen nach einem der Ansprüche 1 bis 3, **dadurch gekennzeichnet, dass** die
Sägeeinrichtung (3) der Bearbeitungsstation (II) die Form einer Bandsäge (12) aufweist, deren Sägeblatt (10) vorzugsweise in einer horizontalen Ebene bewegt wird, wobei die Fördervorrichtung (2) mit dem Baumstamm (1) zur Ausführung eines Sägeschnittes zur Bandsäge (12) bewegbar ist, oder, wobei die Sägeeinrichtung (3) zur Ausführung eines Sägeschnittes zur Fördervorrichtung (2) bewegbar ist.

5. Anlage zum Zerlegen von Baumstämmen nach einem der Ansprüche 1 bis 4, **dadurch gekennzeichnet, dass** die Bearbeitungsstation (II) eine weitere Sägeeinrichtung (13) umfasst, die der Sägeeinrichtung (3) vor- oder nachgeschaltet ist und zur Erzeugung einzelner Bohlen (4') aus einem Brett (4) einzelne Sägeblätter (17) aufweist, die vorzugsweise quer zur Bewegungsrichtung des Baumstammes (1) voneinander beabstandet sind.

6. Anlage zum Zerlegen von Baumstämmen nach Anspruch 5,
**dadurch gekennzeichnet, dass** die Sägeblätter (17) in Bezug auf die Längsachse des Baumstammes (1) derart geneigt sind, dass ihre Schnittebenen parallel zu den Fasern (22) des Baumstammes (1) verlaufen.

7. Anlage zum Zerlegen von Baumstämmen nach Ansprüchen 5 oder 6, **dadurch gekennzeichnet, dass** zumindest die äußeren Sägeblätter (17) der weiteren Sägeeinrichtung (13) in Bezug auf die Schnittebene der Sägeeinrichtung (3) derart geneigt sind, dass ihre Schnittebenen tangential zu einem Punkt des Außenumfanges des Querschnittes des Baumstammes (1) verlaufen.

8. Anlage zum Zerlegen von Baumstämmen nach einem der Ansprüche 5 bis 7, **dadurch gekennzeichnet, dass** die Sägeblätter (17) Kreissägeblätter sind.

9. Anlage zum Zerlegen von Baumstämmen nach einem der Ansprüche 1 bis 8, **dadurch gekennzeichnet, dass** die Kontrollstation (IV) Informationen über die Form der Schnittebene des gerade in der Bearbeitungsstation (II) durch die Sägeeinrichtung (3) bearbeiteten Baumstammes (1) erfasst und in einer Recheneinheit (15) speichert, die daraus ein Steuersignal (S) erzeugt und der Bearbeitungsstation (II) zur Einstellung der Neigung der Sägeblätter (17) der weiteren Sägeeinrichtung (13) in Bezug auf die Längsachse des Baumstammes (1) und parallel zu den Fasern (22) des Baumstammes (1) zuführt.

10. Anlage zum Zerlegen von Baumstämmen nach einem der Ansprüche 1 bis 9, **dadurch gekennzeichnet, dass** die Kontrollstation (IV) Informationen über die jeweilige Qualität des Baumstammes (1) ausgehend von der Oberfläche des gerade bearbeiteten Baumstammes (1) bis zu einer bestimmten Tiefe ermittelt und in einer Recheneinheit (15) speichert, die daraus ein Steuersignal (S) erzeugt und der Bearbeitungsstation (II) zur Einstellung der Schnitttiefe der Sägeeinrichtung (3) zuführt.

11. Anlage zum Zerlegen von Baumstämmen nach Anspruch 11, **dadurch gekennzeichnet, dass** die Kontrollstation (IV) Informationen über die Querschnittsform des Baumstammes im Bereich der ermittelten Schnitttiefe ermittelt und der Recheneinheit (15) zuführt, die daraus die Neigung zumindest der äußeren Sägeblätter (17) derart bestimmt, dass deren Schnittflächen tangential zum Querschnitt des aus dem Baumstamm (1) herauszusägenden Brettes (4) verlaufen.

12. Verfahren zum Zerlegen von Baumstämmen nach einem der Ansprüche 1 bis 11, **dadurch gekennzeichnet, dass** ein Baumstamm (1) zur Ausführung eines Bearbeitungszyklus in
der Beladestation (I) einer Fördervorrichtung (2) zugeführt wird, dass die Fördervorrichtung (2) zu der Bearbeitungsstation (II) bewegt wird, in der der Baumstamm (1) mit wenigstens einer Sägeeinrichtung (3; 13) in einzelnen Sägeschritten zu Brettern (4) zersägt wird, dass die Fördervorrichtung (2) zu der Entnahmestation (III) bewegt wird, in der ihr die jeweils in der Bearbeitungsstation (II) hergestellten Bretter (4) entnommen werden, dass die Fördervorrichtung (2) zu der Kontrollstation (IV) bewegt wird, in der jeweils nach einer in der Bearbeitungsstation (II) ausgeführten Sägeoperation der verbleibende Rest des Baumstammes (1) zur Erfassung seiner Abmessung und Qualität kontrolliert wird, wobei aus den in der Kontrollstation (IV) ermittelten Informationen Steuersignale (S) zur Steuerung der Sägeeinrichtung (3) der Bearbeitungsstation (II) bei dem an dem Baumstamm (1) auszuführenden nächsten Sägeschrittverwendet verwendet werden, und dass die Fördervorrichtung (2) danach zur Ausführung des nächstfolgenden Bearbeitungszyklus wieder zur Beladestation (I) bewegt wird.

13. Verfahren zum Zerlegen von Baumstämmen nach Anspruch 12, **dadurch gekennzeichnet, dass** der nach der Ausführung der zum Zerlegen des Baumstammes (1) erforderlichen Bearbeitungszyklen die Fördervorrichtung in der Beladestaion (I) mit einem weiteren zu zerlegenden Baumstamm (1) beladen wird.
